# EUROPEAN PATENT APPLICATION

(11) **EP 2 717 642 A1**
(43) Date of publication of application: **09.04.2014**
(21) Application number: 12793809.0
(22) Date of filing: 29.05.2012
(51) Int. Cl.: H04W 72/04, H04J 1/00, H04W 16/32, H04W 84/10

(54) **MOBILE COMMUNICATION METHOD AND WIRELESS BASE STATION**

(30) Priority: 31.05.2011 JP 2011122197
(71) Applicant: NTT DOCOMO, INC., Chiyoda-ku Tokyo 100-6150 (JP)
(72) Inventor: TAKAHASHI, Hideaki, Tokyo 100-6150 (JP); OKAMOTO, Takeshi, Tokyo 100-6150 (JP); ABE, Tetsushi, Tokyo 100-6150 (JP)
(74) Representative: HOFFMANN EITLE
(86) International application number: PCT/JP2012/063719
(87) International publication number: WO 2012/165412

(57) **Abstract**

An "extension carrier" is exchanged between radio base stations eNB adjacent to each other. A mobile communication method according to the present invention includes a step in which a radio base station eNB#1 notifies a nearby radio base station eNB#2 of the "extension carrier" when multiple carriers include the "extension carrier". The multiple carriers include at least one "stand-alone-capable carrier".

## Description

### Technical Field

The present invention relates to a mobile communication method and a radio base station.

### Background Art

In an LTE (Long Term Evolution)-Advanced system, a mobile station UE is configured to be able to conduct CA (Carrier Aggregation) communication using multiple carriers under control of one radio base station eNB.

In an LTE-Advance system, an "extension carrier" has been studied to be introduced in the conventional LTE-Advanced system for transmitting only an uplink data signal, a downlink data signal and a PDCCH (Physical Downlink Control Channel) signal is transmitted on a different carrier.

When the "extension carrier" is introduced, in the CA communication, a radio base station eNB is enabled to transmit a data signal on the "extension carrier" through the PDSCH by "cross carrier scheduling" from "P_{cell}".

As a result, for example, the "P_{cell}" is divided into a macro cell and a pico cell, and the "extension carrier" is shared by the macro cell and the pico cell, whereby "ICIC (Inter Cell Interference Coordination)" is expected to be performed.

### Citation List

### Non-Patent Literature

Non-Patent Literature 1: 3GPP TS36.300
Non-Patent Literature 2: 3GPP TS36.423

### Summary of Invention

However, unfortunately the "ICIC" cannot be performed because the conventional LTE-Advanced system does not have a structure in which the "extension carrier" is exchanged between the radio base stations eNB adjacent to each other.

The present invention has been devised to solve the problem described above, and an object thereof is to provide a mobile communication method and a radio base station, in which the "extension carrier" is exchanged between the radio base stations eNB adjacent to each other.

In accordance with a first aspect of the present invention, a mobile communication method in which a mobile station conducts communication using multiple carriers under control of a radio base station, the mobile communication method includes a step in which the radio base station notifies a nearby radio base station of an extension carrier when the multiple carriers include the extension carrier. In the mobile communication method, the multiple carriers include at least one stand-alone-capable carrier.

In accordance with a second aspect of the present invention, a radio base station used in a mobile communication system in which a mobile station can conduct communication using multiple carriers under control of a radio base station, the radio base station includes a transmission unit that is configured to notify a nearby radio base station of an extension carrier when the multiple carriers include the extension carrier. In the radio base station, the multiple carriers include at least one stand-alone-capable carrier.

### Brief Description of Drawings

Fig. 1 is an entire configuration diagram illustrating a mobile communication system according to a first embodiment of the present invention.
Fig. 2 is a functional block diagram illustrating a radio base station of the first embodiment of the present invention.
Fig. 3 is a view illustrating an example of a format of "served cell information" used in the mobile communication system of the first embodiment of the present invention.

### Description of Embodiment

### (Mobile communication system According to first embodiment of the present invention)

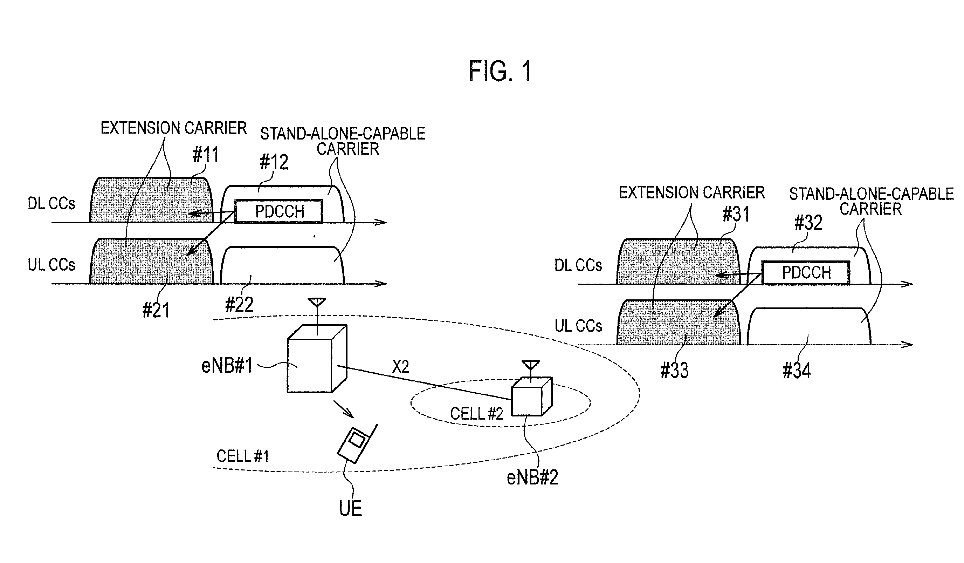

A mobile communication system according to a first embodiment of the present invention will be described with reference with Figs. 1 to 3. In the embodiment, an LTE mobile communication system is described as an example of the mobile communication system of the embodiment. However, the present invention can also be applied to a none-LTE mobile communication system.

In addition, for example, the mobile communication system of the embodiment is configured to be able to perform the "ICIC" in order to reduce inter-cell interference.

As illustrated in Fig. 1, the mobile communication system of the embodiment includes a radio base station eNB#1 that manages a cell #1 and a radio base station eNB#2 that manages a cell #2.

The cells #1 and #2 may be a macro cell or a CSG (Closed Subscriber Group) cell. The CSG cell may also be called a femto cell, a micro cell, or a pico cell.

The mobile communication system is configured such that X2 connection is set between the radio base station eNB#1 and the radio base station eNB#2.

A mobile station UE is configured to be able to conduct the CA communication using multiple CCs (Component Carriers) under control of the radio base station eNB#1.

For example, as illustrated in Fig. 1, the mobile station UE is configured to be able to conduct the CA communication using a CC #11 and a CC #12 as a downlink CC and a CC# 21 and a CC #22 as an uplink CC under the control of the radio base station eNB#1.

The CC #11 and the CC #21 are the "extension carrier", and the CC #12 and the CC #22 are a "stand-alone-capable carrier" with which the communication can be conducted by the conventional LTE-Advanced system.

That is, the "stand-alone-capable carrier" is one on which not only the uplink data signal and the downlink data signal but also the PDCCH signal are transmitted.

Similarly the mobile station UE is configured to be able to conduct the CA communication using the multiple CCs under the radio base station eNB#2.

For example, as illustrated in Fig. 1, the mobile station UE is configured to conduct the CA communication using a CC #31 and a CC #32 as the downlink CC and a CC# 33 and a CC #34 as the uplink CC under the control of the radio base station eNB#2.

The CC #31 and the CC #33 are the "extension carrier", and the CC #32 and the CC #34 are the "stand-alone-capable carrier".

It is necessary that the multiple carriers used in the CA communication include at least one "stand-alone-capable carrier". The "extension carrier" does not act as the "stand-alone-capable carrier".

Because the radio base station eNB#1 and the radio base station eNB#2 have a basically identical function, the function of the radio base station eNB#1 will typically be described below.

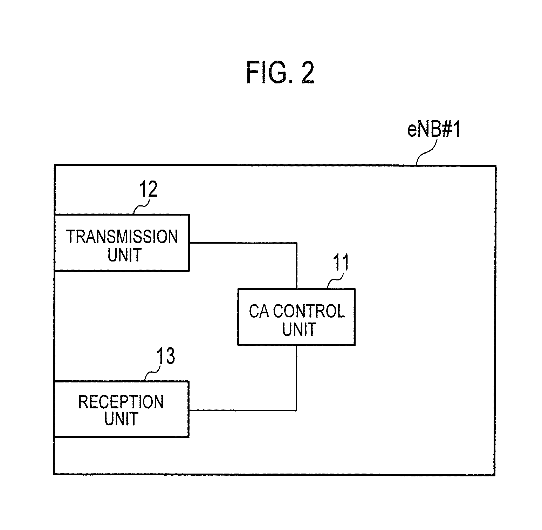

As illustrated in Fig. 2, the radio base station eNB#1 includes a CA control unit 11, a transmission unit 12, and a reception unit 13.

The CA control unit 11 is configured to control the CA communication of the mobile station UE under the radio base station eNB#1.

The transmission unit 12 is configured to transmit various signals to the mobile station UE and a nearby radio base station eNB (for example, radio base station eNB#2).

The reception unit 13 is configured to receive various signals to the mobile station UE and the nearby radio base station eNB (for example, radio base station eNB#2).

At this point, the transmission unit 12 is configured not to be able to transmit a signal through the PDCCH in the "extension carrier".

The transmission unit 12 may be configured to transmit a data signal through the PDCCH in the "extension carrier" based on a scheduling signal transmitted through the PDSCH in the "stand-alone-capable carrier", namely, by "cross carrier scheduling".

Further, the transmission unit 12 is also configured to notify the nearby radio base station eNB#2 of the "extension carrier", when the "extension carrier" is included in the multiple CCs used in the CA communication of the mobile station UE under the radio base station eNB#1.

At this point, the transmission unit 12 may be configured to make a notification of the "extension carrier" when the X2 connection is set with the nearby radio base station eNB#2.

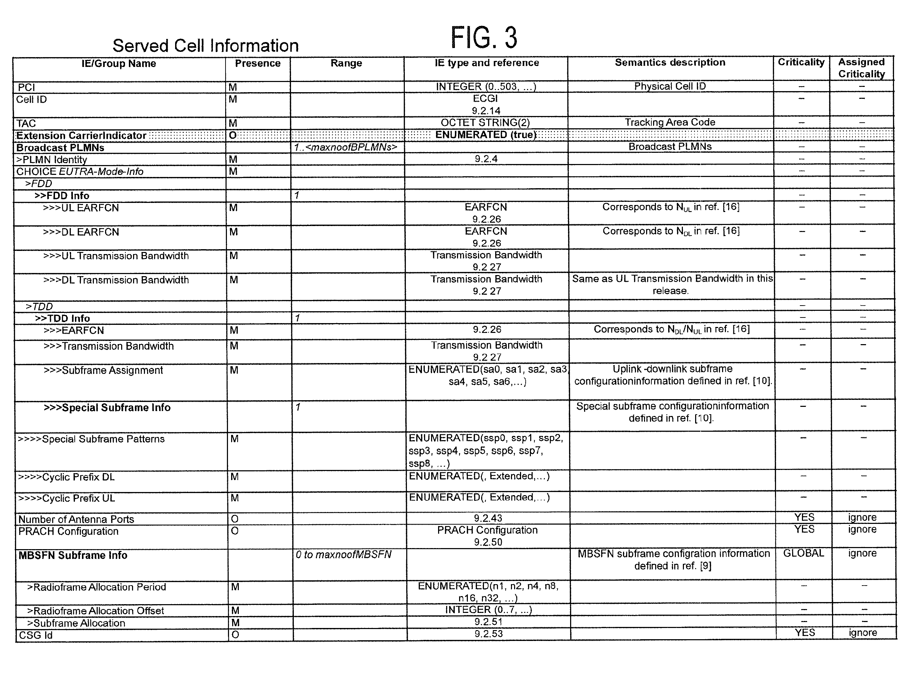

For example, the transmission unit 12 may be configured to transmit an "X2 setup request" or an "X2 setup response", which includes an information element "served cell information" in Fig. 3, to the nearby radio base station eNB#2.

The transmission unit 12 may be configured to make the notification of the "extension carrier" in changing the setting of the X2 connection set with the nearby radio base station eNB#2.

For example, the transmission unit 12 may be configured to transmit "eNB configuration update" including the information element "served cell information" in Fig. 3 to the nearby radio base station eNB#2.

At this point, identification information of the "extension carrier" can be set to an information element "extension carrier indicator" in the information element "served cell information".

In the mobile communication system of the embodiment, for example, the "extension carrier" is shared by the cell #1 and the cell #2, and the "cross carrier scheduling" is used, which allows "ICIC" to be performed.

According to the mobile communication system of the embodiment, the "extension carrier" can be exchanged between the radio base stations eNB adjacent to each other using the "X2 setup request", the "X2 setup response", or the "eNB configuration update".

The features of the embodiment may be expressed as follows.

The first feature of the embodiment is the mobile communication method in which the mobile station UE conducts the communication (the CA communication) using the multiple CCs (carriers) under the control of the radio base station eNB#1; the mobile communication method includes the step in which the radio base station eNB#1 notifies the nearby radio base station eNB#2 of the "extension carrier" when the multiple CCs include the "extension carrier". In the mobile communication method, the multiple carriers include at least one "stand-alone-capable carrier" with which the communication can be conducted by the conventional LTE-Advanced system.

In the first feature, in the step above, the radio base station eNB#1 may make notification of the "extension carrier" using the "X2 Setup Request" or the "X2 setup response" when the X2 connection is set with the nearby radio base station eNB#2.

In the first feature, in the step above, the radio base station eNB#1 may make notification of the "extension carrier" using the "eNB configuration update" in changing the setting of the X2 connection set with the nearby radio base station eNB#2.

In the first feature, the radio base station eNB does not transmit the signal through the PDCCH (Physical Downlink Control Channel) in the "extension carrier", but the radio base station eNB may transmit the data signal through the PDSCH in the "extension carrier" based on the scheduling signal that is transmitted through the PDCCH in the "stand-alone-capable carrier".

The second feature of the embodiment is, the radio base station eNB#1 used in the mobile communication system in which the mobile station UE can conduct the communication using the multiple CCs under the control of the radio base station eNB#1, the radio base station eNB#1 includes the transmission unit 12 that is configured to notify the nearby radio base station eNB#2 of the "extension carrier" when the multiple CCs include the "extension carrier". In the radio base station eNB#1, the multiple CCs include at least one "stand-alone-capable carrier" with which the communication can be conducted by the conventional LTE-Advanced system.

In the second feature, the transmission unit 12 is configured to make the notification of the "extension carrier" using the "X2 setup request" or the "X2 setup response" when the X2 connection is set with the nearby radio base station eNB#2.

In the second feature, the transmission unit 12 is configured to make the notification of the "extension carrier" using the "eNB configuration update" in changing the setting of the X2 connection set with the nearby radio base station eNB#2.

In the second feature, the transmission unit 12 is configured not to transmit the signal through the PDCCH in the "extension carrier", but the transmission unit 12 is configured to transmit the data signal through the PDSCH in the "extension carrier" based on the scheduling signal that is transmitted through the PDCCH in the "stand-alone-capable carrier".

Further, operations of the radio base stations eNB#1, eNB#2 and mobile station UE may be performed by hardware, a software module executed by a processor, or a combination thereof.

The software module may be provided in any type storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to a processor such that the processor can write and read the information in and from the storage medium. The storage medium may be integrated in the processor. The storage medium and the processor may be provided in an ASIC. The ASIC may be provided in the radio base station eNB or the mobile station UE. The storage medium and the processor may be provided in the radio base stations eNB#1 and eNB#2 or the mobile station UE in a form of a discrete component.

Although the present invention is described above using the embodiment, it is obvious for those skilled people in the art that the present invention is not limited to the embodiment. Various modifications and changes can be made without departing from the scope of the present invention. Accordingly, the description is illustrative only, but not restrictive.

The present application claims priority from Japanese Patent Application No. 2011-122197 (filed on May 31, 2011), the entire contents of which are hereby incorporated by reference.

### Industrial Applicability

As described above, the present invention can provide the mobile communication method and the radio base station, in which the "extension carrier" is exchanged between the radio base stations eNB adjacent to each other.

### Reference Signs List

- eNB#1, eNB#2: radio base station
- 11: CA control unit
- 12: transmission unit
- 13: reception unit
- UE: mobile station

## Claims

1. A mobile communication method in which a mobile station conducts communication using a plurality of carriers under control of a radio base station, the mobile communication method comprising a step in which the radio base station notifies a nearby radio base station of an extension carrier when the plurality of carriers include the extension carrier,
wherein the plurality of carriers include at least one stand-alone-capable carrier.

2. The mobile communication method according to claim 1, wherein, in the step, the radio base station makes the notification of the extension carrier when X2 connection is set with the nearby radio base station.

3. The mobile communication method according to claim 1, wherein, in the step, the radio base station makes the notification of the extension carrier in changing the setting of the X2 connection set with the nearby radio base station.

4. The mobile communication method according to claim 1, wherein the radio base station does not transmit a signal through a physical downlink control channel in the extension carrier, and
the radio base station transmits a data signal through a physical downlink shared channel in the extension carrier based on a scheduling signal that is transmitted through the physical downlink control channel in the stand-alone-capable carrier.

5. A radio base station used in a mobile communication system in which a mobile station can conduct communication using a plurality of carriers under control of a radio base station, the radio base station comprising a transmission unit that is configured to notify a nearby radio base station of an extension carrier when the plurality of carriers include the extension carrier,
wherein the plurality of carriers includes at least one stand-alone-capable carrier.

6. The radio base station according to claim 5, wherein the transmission unit is configured to make the notification of the extension carrier when X2 connection is set with the nearby radio base station.

7. The radio base station according to claim 5, wherein the transmission unit is configured to make the notification of the extension carrier in changing the setting of the X2 connection set with the nearby radio base station.

8. The radio base station according to claim 5, wherein the transmission unit is configured not to transmit a signal through a physical downlink control channel in the extension carrier, and
the transmission unit is configured to transmit a data signal through a physical downlink shared channel in the extension carrier based on a scheduling signal that is transmitted through the physical downlink control channel in the stand-alone-capable carrier.
